(19) Europäisches Patentamt
European Patent Office
Office européen des brevets

(11) EP 0 991 466 B1

(12) **FASCICULE DE BREVET EUROPEEN**

(45) Date de publication et mention de la délivrance du brevet:
**27.10.2004 Bulletin 2004/44**

(21) Numéro de dépôt: **98929535.7**

(22) Date de dépôt: **10.06.1998**

(51) Int Cl.[7]: **B01J 21/04**, C01F 7/02, C01F 7/44

(86) Numéro de dépôt international:
**PCT/FR1998/001186**

(87) Numéro de publication internationale:
**WO 1998/056499 (17.12.1998 Gazette 1998/50)**

(54) **EXTRUDES D'ALUMINE, LEURS PROCEDES DE PREPARATION ET LEUR UTILISATION COMME CATALYSEURS OU SUPPORTS DE CATALYSEURS**

ALUMINIUMOXIDEXTRUDATE, IHRE HERSTELLUNGSVERFAHREN UND VERWENDUNG DIESER, ALS KATALYSATOREN ODER KATALYSATORTRÄGER

ALUMINA EXTRUDATES, METHODS FOR PREPARING AND USE AS CATALYSTS OR CATALYST SUPPORTS

(84) Etats contractants désignés:
**DE FR GB IT NL**

(30) Priorité: **10.06.1997 FR 9707146**

(43) Date de publication de la demande:
**12.04.2000 Bulletin 2000/15**

(73) Titulaire: **Institut Français du Pétrole**
**92852 Rueil-Malmaison Cedex (FR)**

(72) Inventeurs:
- **LE LOARER, Jean-Luc**
  **F-30340 Salindres (FR)**
- **NUSSBAUM, Hubert**
  **F-30140 Boisset et Gaujac (FR)**
- **BORTZMEYER, Denis**
  **F-94300 Vincennes (FR)**

(56) Documents cités:

| | |
|---|---|
| **EP-A- 0 015 801** | **EP-A- 0 353 129** |
| **DE-A- 2 758 945** | **DE-A- 4 311 650** |
| **FR-A- 2 299 911** | **FR-A- 2 528 721** |
| **FR-A- 2 537 889** | **FR-A- 2 556 235** |
| **US-A- 3 856 708** | **US-A- 4 579 728** |

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 991 466 B1

## Description

La présente invention concerne de nouveaux extrudés à base d'alumine. Elle concerne également des procédés de préparation de ces extrudés et leur utilisation comme supports de catalyseurs, notamment pour l'hydrotraitement. L'utilisation de catalyseurs comprenant un support extrudé selon la présente demande, pour des procédés d' hydroraffinage ou d'hydroconversion de charges hydrocarbonées dans un réacteur en lit bouillonnant, fait l'objet d'une demande européenne de brevet séparée: EP 0 884 372 A.

L'hydrotraitement des coupes pétrolières est une opération de purification sous pression d'hydrogène recouvrant plusieurs types de traitements et en particulier : l'hydrodésulfuration, l'hydrodémétallation, l'hydrodénitrification, l'hydroréduction du carbone conradson (HDCC), l'hydrogénation des asphaltènes (HDAS), l'hydrogénation des aromatiques (HDAr).

L'hydrodémétallation permet l'élimination des métaux, nickel et vanadium en particulier, contenus dans les fractions pétrolières lourdes issues des distillations sous vide des premières étapes de la raffinerie.

L'hydrodésulfuration permet l'élimination des composés soufrés tels que RSH ou $R_2S$, R étant un radical alkyl. Elle est plutôt utilisée sur des fractions pétrolières légères ou présentant une teneur en métaux (Ni et V) faible.

En hydrotraitement des coupes pétrolières lourdes, il est important que le catalyseur utilisé soit équilibré en hydrodémétallation et hydrodésulfuration, c'est-à-dire qu'il présente la même efficacité pour ces deux activités.

De plus, le catalyseur doit présenter une bonne capacité de rétention en hydrodémétallation. En effet, contrairement au cas de l'hydrodésulfuration dont les produits de la réaction restent dans le milieu réactionnel, les produits issus de l'hydrodémétallation restent absorbés sur le catalyseur. Il est donc important que le catalyseur puisse absorber la plus grande quantité possible de dérivés métalliques issus de l'hydrodémétallation car une fois saturé en dérivés métalliques, il devra être remplacé.

Hors, lors de l'hydrodémétallation catalytique, l'élimination des métaux se heurtent à un certain nombre de problèmes catalytiques, en particulier au niveau du support catalytique.

Un premier problème tient au fait que les composés métalliques sont des molécules de poids moléculaire élevé, telles que des asphaltènes et des résines, présentant un encombrement stérique important d'où des limitations diffusionnelles dans le réseau des pores du catalyseur.

Un deuxième problème tient à ce que les métaux ou plus exactement les sulfures des métaux issus de la décomposition des composés métalliques s'accumulent au cours de l'opération diminuant progressivement le diamètre des pores.

Un troisième problème est lié au fait que les composés métalliques, du type asphaltènes, ont tendance dans les conditions opératoires, à se déshydrogéner puis à se polycondenser pour donner naissance à des produits insolubles dans le milieu hydrocarboné et à du coke qui reste fixé sur le catalyseur dont il diminue progressivement l'activité.

Un catalyseur d'hydrotraitement de coupe lourde doit donc être composé d'un support catalytique présentant un profil de porosité particulièrement adapté aux contraintes diffusionnelles spécifiques aux hydrotraitements et notamment à l'hydrodémétallation.

Les catalyseurs usuellement employés sont composés d'un support sur lequel sont déposés des oxydes métalliques, tels que par exemple les oxydes de cobalt, de nickel ou de molybdène. Le support est en général à base d'alumine, son rôle étant de disperser la phase active et de présenter une texture adaptée à une bonne captation des impuretés métalliques en évitant les problèmes définis ci-dessus.

Les supports à base d'alumine de l'art antérieur sont de deux types.

Premièrement, il existe des extrudés d'alumine préparés à partir d'alumine gel. Ces extrudés d'alumine gel représentent la majorité des supports de catalyseurs pour l'hydrotraitement utilisés, mais ils présentent certains inconvénients.

Tout d'abord, leur porosité est surtout adaptée à l'hydrodésulfuration et l'hydrotraitement des coupes hydrocarbonées légères, et non aux autres types de traitement.

Ensuite, même si ces extrudés sont équilibrés dans leur rapport hydrodémétallation/hydrodésulfuration, leur capacité de rétention en hydrodémétallation est faible, en général d'au plus 30 %, si bien qu'ils sont rapidement saturés et doivent être remplacés.

En outre, l'alumine gel est chère, ce qui revient à fabriquer des supports dont le coût est élevé.

Enfin, le procédé de préparation de l'alumine gel est particulièrement polluant contrairement à celui de l'alumine issue de la déshydratation rapide d'hydrargillite, dite alumine flash.

On utilise aussi, pour l'hydrotraitement, des billes d'alumine préparées à base d'alumine issue de la déshydratation rapide d'hydrargillite, dont le coût est moins élevé. Ces billes ont cependant un inconvénient : afin de présenter un prix de revient satisfaisant, le diamètre des billes est supérieur à 2 mm si bien que les métaux ne peuvent pas s'introduire jusqu'au coeur des billes. La phase catalytique dont est imprégné le coeur des billes n'est donc pas utilisée.

Des extrudés d'alumine flash de plus petite taille ne présenteraient pas cet inconvénient, mais il n'existe pas aujourd'hui de procédé de préparation permettant d'obtenir des extrudés d'alumine flash dont la porosité serait adaptée

à l'hydrotraitement.
Les catalyseurs décrits dans le brevet français FR-2 528 721, comprennent bien une porosité adaptée à l'hydrotraitement de charges hydrocarbonées contenant des métaux: ces catalyseurs ont une structure "en oursin" permettant d'accepter des dépôts notables de métaux. Il est également mentionné dans ce brevet la possibilité d'utiliser de l'alumine préparée par déshydratation rapide d'hydrargillite. Les procédés de fabrication industrielle des catalyseurs décrits dans ce brevet sont cependant plus particulièrement adaptés à la production de billes, et très difficiles à mettre en oeuvre industriellement pour la préparation d'extrudés.

Un objectif de la présente invention de proposer des supports à base d'alumine pour l'hydrotraitement dont le coût soit peu élevé.

Un autre objectif de la présente invention est de proposer des extrudés d'alumine, issue de la déshydratation rapide d'hydrargillite, dont les caractéristiques soient adaptées à leur utilisation comme supports de catalyseurs pour l'hydrotraitement.

Un autre objectif de la présente invention est de proposer des procédés de préparation de ces extrudés d'alumine.

Dans ces buts, l'invention concerne tout d'abord des extrudés d'alumine selon la revendication 1 issus d'un procédé de préparation partant d'une alumine issue de la déshydratation rapide d'hydrargillite présentant un volume poreux total d'au moins 0,6 $cm^3/g$, un diamètre moyen mésoporeux compris entre 140 et 360 Å, un taux d'alumine issue de la décomposition de boehmite compris entre 5 et 70 % en poids.

L'invention concerne également un premier procédé de mise en forme d'alumine à partir d'une alumine de départ issue de la déshydratation rapide d'hydrargillite, comprenant les étapes suivantes :

**$a_1$.** on part d'une alumine issue de la déshydratation rapide d'hydrargillite
**b1.** on réhydrate l'alumine de départ,
**c1.** on malaxe l'alumine réhydratée en présence d'une émulsion d'au moins un hydrocarbure dans l'eau,
**$d_1$.** on extrude la pâte à base d'alumine obtenue à l'étape **$c_1$,**
**$e_1$.** on sèche et on calcine les extrudés,
**$f_1$.** on soumet les extrudés issue de l'étape **$e_1$** à un traitement hydrothermal acide en atmosphère confinée,
**$g_1$.** on sèche éventuellement, et on calcine les extrudés issus de l'étape **$f_1$.**

L'invention concerne aussi un deuxième procédé de mise en forme d'alumine à partir d'une alumine de départ issue de la déshydratation rapide d'hydrargillite, comprenant les étapes suivantes :

**$a_2$.** on part d'une alumine de départ issue de la déshydratation rapide d'hydrargillite,
**$b_2$.** on met en forme l'alumine sous forme de billes en présence d'un porogène,
**$c_2$.** on fait murir les billes d'alumine obtenues,
**$d_2$.** on malaxe les billes issues de l'étape **$c_2$** ce par quoi on obtient une pâte que l'on extrude,
**$e_2$.** on sèche et on calcine les extrudés obtenus,
**$f_2$.** on soumet les extrudés issue de l'étape **$e_2$** à un traitement hydrothermal acide en atmosphère confinée,
**$g_2$.** on sèche éventuellement, et on calcine les extrudés issus de l'étape **$f_2$.**

L'invention concerne également un troisième procédé de mise en forme d'alumine à partir d'une alumine de départ issue de la déshydratation rapide d'hydrargillite, comprenant les étapes suivantes :

**$a_3$.** on part d'une alumine issue de la déshydratation rapide d'hydrargillite
**$b_3$.** on réhydrate l'alumine de départ,
**$c_3$.** on malaxe l'alumine réhydratée avec un gel de pseudo-boehmite, ledit gel étant présent dans une teneur comprise entre 1 et 30 % en poids par rapport à l'alumine réhydratée et au gel,
**$d_3$.** on extrude la pâte à base d'alumine obtenue à l'étape **$c_3$,**
**$e_3$.** on sèche et on calcine les extrudés,
**$f_3$.** on soumet les extrudés issue de l'étape **$e_3$** à un traitement hydrothermal acide en atmosphère confinée,
**$g_3$.** on sèche éventuellement, et on calcine les extrudés issus de l'étape **$f_3$.**

Enfin l'invention concerne l'utilisation de cette alumine en tant que catalyseur ou support de catalyseur.

Les figures 1 et 2 sont des photographies de coupes d'un extrudé selon l'invention réalisées par microscopie électronique par transmission.

En hydrotraitement, les extrudés selon l'invention présentent l'avantage d'être équilibrés en hydrodémétallation et hydrodésulfuration et de présenter une bonne capacité de rétention en hydrodémétallation.

D'autres avantages de l'invention apparaîtront à la lecture de la description plus détaillée.

L'invention concerne tout d'abord des extrudés d'alumine issus d'un procédé de préparation partant d'une alumine issue de la déshydratation rapide d'hydrargillite présentant un volume poreux total d'au moins 0,6 $cm^3/g$, un diamètre moyen mésoporeux compris entre 140 et 360 Å, un taux d'alumine issue de la décomposition de boehmite compris entre 5 et 70 % en poids.

Par alumine issue de la décomposition de boehmite, il faut comprendre qu'au cours du procédé de préparation des extrudés, de l'alumine type boehmite s'est développée au point de représenter 5 à 70 % en poids de l'alumine totale, puis a été décomposée. Ce taux d'alumine issue de la décomposition de boehmite est mesuré par diffraction RX sur l'alumine avant décomposition de ladite boehmite.

Les extrudés d'alumine selon l'invention présentent un volume poreux total (VPT) d'au moins 0,6 $cm^3/g$, de préférence d'au moins 0,65 $cm^3/g$.

Ce VPT est mesuré de la façon suivante : on détermine la valeur de la densité de grain et de la densité absolue : les densités de grain (Dg) et absolue (Da) sont mesurées par la méthode de picnométrie respectivement au mercure et à l'hélium, le VPT est donné par la formule :

$$\frac{1}{Dg} - \frac{1}{Da}.$$

Les extrudés selon l'invention présentent également un diamètre moyen mésoporeux compris entre 150 et 360 Å. Le diamètre moyen mésoporeux pour des extrudés donnés est mesuré sur la base de la représentation graphique de la répartition poreuse desdits extrudés. Il s'agit du diamètre dont le volume associé sur la représentation graphique vaut :

$$V_{1000Å} + \frac{V_{60Å} - V_{1000Å}}{2}$$

avec :

$V_{1000Å}$ représentant le volume créé par les pores de diamètre supérieur à 1000 Å ou volume macroporeux.
$V_{60Å}$ représentant le volume créé par les pores de diamètre supérieur à 60 Å.
$V_{60Å} - V_{1000Å}$ représentant le volume mésoporeux i.e. le volume créé par les pores de diamètre compris entre 60 Å et 1000 Å, c'est-à-dire le volume créé par tous les pores de taille comprise entre 60 Å et 1000 Å.

Ces volumes sont mesurés par la technique de la pénétration du mercure dans laquelle on applique la loi de Kelvin qui donne la relation entre la pression, le diamètre du plus petit pore dans lequel le diamètre pénètre à ladite pression, l'angle de mouillage et la tension superficielle selon la formule :

$$Ø = (4t \cos\theta) / P \text{ dans laquelle}$$

Ø représente le diamètre du pore,
t la tension superficielle,
$\theta$ l'angle de contact, et
P la pression.

Les extrudés selon l'invention présentent un volume mésoporeux ($V_{60Å} - V_{1000Å}$) d'au moins 0,3 $cm^3/g$, voire d'au moins 0,5 $cm^3/g$.

Les extrudés selon l'invention présentent un volume macroporeux ($V_{1000Å}$) d'au plus 0,5 $cm^3/g$. Selon une variante, le volume macroporeux ($V_{1000Å}$) est d'au plus 0,3 $cm^3/g$, encore plus préférentiellement d'au plus 0,1 $cm^3/g$, voire d'au plus 0,08 $cm^3/g$.

Ces extrudés présentent un volume microporeux ($V_{0-60Å}$) d'au plus 0,55 $cm^3/g$, de préférence d'au plus 0,2 $cm^3/g$. Le volume microporeux représente le volume créé par les pores de diamètre inférieur à 60 Å.

Une telle répartition poreuse qui minimise la proportion de pores inférieurs à 60 Å et de ceux supérieurs à 1000 Å tout en augmentant la proportion des mésopores (diamètre entre 60 Å et 1000 Å) est particulièrement adaptée aux contraintes diffusionnelles de l'hydrotraitement de coupes hydrocarbures lourdes.

Selon une variante, la répartition poreuse sur le domaine de diamètre de pores compris entre 60 Å et 1000 Å est extrèmement resserrée autour du diamètre de pores 140 Å, de préférence sur ledit domaine la majorité des pores ont un diamètre compris entre 60 et 500 Å, encore plus préférentiellement compris entre 80 et 200 Å.

Les extrudés selon l'invention présentent une surface spécifique (SS) d'au moins 120 $m^2/g$, de préférence d'au moins 150 $m^2/g$. Cette surface est une surface BET. On entend par surface BET, la surface spécifique déterminée par adsorption d'azote conformément à la norme ASTM D 3663-78 établie à partir de la méthode BRUNAUER - EMMETT - TELLER décrite dans le périodique "The Journal of the american Society", 60, 309 (1938).
On préfère les extrudés selon l'invention dont le diamètre est compris entre 0,3 et 10 mm, de préférence entre 0,8 et 3,2, et la longueur comprise entre 1 et 20 mm, de préférence entre 1 et 10.
Ces extrudés présentent en général un écrasement grain à grain (EGG) d'au moins 0,7 kg/mm pour des extrudés de diamètre 1,6 mm, de préférence d'au moins 1, et une résistance à l'écrasement (ESH) d'au moins 1 MPa.
La méthode de mesure de l'écrasement grain à grain (EGG) consiste à mesurer la forme de compression maximale que peut supporter un extrudé avant sa rupture, lorsque le produit est placé entre deux plans se déplaçant à la vitesse constante de 5 cm/min.
La compression est appliquée perpendiculairement à l'une des génératrices de l'extrudé, et l'écrasement grain à grain est exprimé comme le rapport de la force à la longueur de la génératrice de l'extrudé.
La méthode de mesure de la résistance à l'écrasement (ESH) consiste à soumettre une certaine quantité d'extrudés à une pression croissante au dessus d'un tamis et à récupérer les fines issues de l'écrasement des extrudés. La résistance à l'écrasement correspond à la force exercée pour obtenir un taux de fines représentant 0,5 % du poids des extrudés soumis au test.
L'alumine selon l'invention se présente à l'échelle microscopique en partie sous la forme d'empilements de feuillets et en partie sous la forme d'aiguilles, lesdites aiguilles étant dispersées à la fois autour des empilements de feuillets et entre les feuillets.
En général, la longueur et la largeur des feuillets varie entre 1 et 5 µm et leur épaisseur est de l'ordre de 10 nm. Ils peuvent être empilés par groupes formant une épaisseur de l'ordre de 0,1 à 0,5 µm, les groupes pouvant être séparés les uns des autres par épaisseur de l'ordre de 0,05 à 0,1 µm.
La longueur des aiguilles peut être comprise entre 0,05 et 0,5 µm ; leur section est de l'ordre de 5 à 20 nm. Ces mesures sont données par mesure sur les photos des extrudés prises au microscope électronique. Les aiguilles entre les feuillets sont en général plus petites que les aiguilles autour des feuillets.
Les feuillets d'alumine comprennent principalement de l'alumine $\chi$ et de l'alumine $\eta$ et les aiguilles de l'alumine $\gamma$.
La structure en feuillets est caractéristique de la filiation hydrargillite de l'alumine, ce qui signifie que ces extrudés avant activation par calcination présentait cette même structure, les feuillets étant de nature hydrargillite. Par calcination, cette alumine sous forme hydrargillite se transforme principalement en alumines déshydratées $\chi$ et $\eta$.
Par contre, la structure en aiguilles est caractéristique de la filiation boehmite, ce qui signifie que ces extrudés avant activation par calcination présentait cette même structure, les aiguilles étant de nature boehmite. Puis, par calcination, cette alumine sous forme boehmite se transforme en alumine déshydratée $\gamma$.
Les extrudés selon l'invention sont donc obtenus par calcination, les extrudés avant calcination étant constitués de feuillets à base d'alumine hydrargillite ; ces feuillets sont entourés en périphérie des aiguilles à base d'alumine boehmite, de telles aiguilles se retrouvent également entre les feuillets.
L'invention concerne également un premier procédé de mise en forme d'une telle alumine à partir d'une alumine de départ issue de la déshydratation rapide d'hydrargillite, caractérisé en ce qu'il comprend les étapes suivantes :

**$a_1$.** on part d'une alumine issue de la déshydratation rapide d'hydrargillite
**$b_1$.** on réhydrate l'alumine de départ,
**$c_1$.** on malaxe l'alumine réhydratée en présence d'une émulsion d'au moins un hydrocarbure dans l'eau,
**$d_1$.** on extrude la pâte à base d'alumine obtenue à l'étape **$c_1$,**
**$e_1$.** on sèche et on calcine les extrudés,
**$f_1$.** on soumet les extrudés issue de l'étape **$e_1$** à un traitement hydrothermal acide en atmosphère confinée,
**$g_1$.** on sèche éventuellement, et on calcine les extrudés issus de l'étape **$f_1$.**

Le procédé de mise en forme selon l'invention convient à une alumine de départ spécifique issue de la déshydratation rapide de l'hydrate de Bayer (hydrargillite) qui est un hydroxyde d'aluminium industriel facilement accessible et très bon marché.
Une telle alumine est notamment obtenue par déshydratation rapide d'hydrargillite à l'aide d'un courant de gaz chauds, la température d'entrée des gaz dans l'appareillage variant généralement de 400 à 1200 °C environ, le temps de contact de l'alumine avec les gaz chauds étant généralement compris entre une fraction de seconde et 4-5 secondes ; un tel procédé de préparation de poudre d'alumine a particulièrement été décrit dans le brevet FR-A-1 108 011.
L'alumine ainsi obtenue peut être utilisée telle quelle ou peut subir avant l'étape **$b_1$** un traitement pour éliminer notamment les alcalins présents : une teneur en $Na_2O$ inférieure à 0,5 % en poids peut être préférée.

Dans l'étape $b_1$, cette alumine de départ qui se présente sous forme de poudre, est réhydratée. Cette réhydratation conduit à la transformation de l'alumine en une alumine réhydratée en partie sous forme d'alumine type boehmite de texture particulière.

De préférence, on réhydrate l'alumine de départ de manière à ce qu'elle présente un taux d'alumine type boehmite d'au moins 3 % en poids, encore plus préférentiellement d'au plus 40 % en poids, notamment compris entre 10 et 35 %.

Cette réhydratation peut être réalisée par toute moyen connu de l'homme du métier. De préférence, on réhydrate l'alumine de départ par mise en suspension dans l'eau en présence d'un agent complexant du cation $Al^{3+}$.

Cet agent complexant peut être choisi dans le groupe formé par :

- les acides comprenant au moins un groupement carboxylate et au moins deux groupements hydroxyle et/ou amine, ou comprenant au moins deux groupements carboxylate et au moins un groupement hydroxyle et/ou amine, et leurs sels,
- les acides phosphoriques organiques de formules (I), (II) et (III) suivantes :

(I)

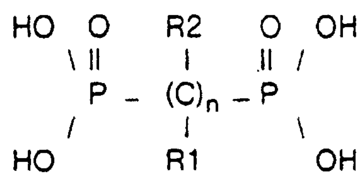

(II)

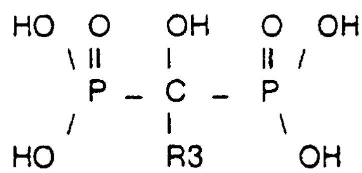

(III)

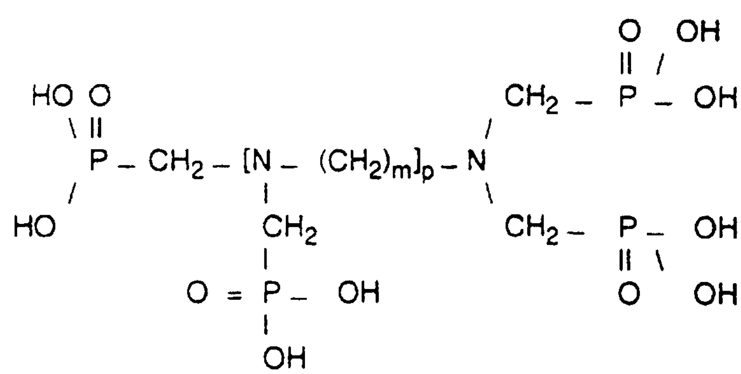

dans lesquelles, n et m sont des nombres entiers compris entre 1 et 6, p est un nombre entier compris entre 0 et 5, R1, R2, R3 identiques ou différents représentant un atome d'hydrogène, un groupement aralkyle, aryle, alkyle ou un groupement hydroxyle ou amine,

- les hydroxyquinoléines ou dérivés répondant à la formule (IV) suivante :

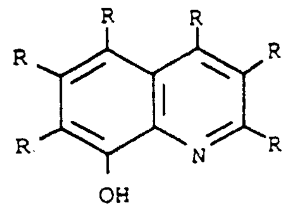

dans laquelle, R représente un atome d'hydrogène, un radical hydrocarboné ayant de 1 à 20 atomes de carbone ou un atome d'halogène.

De préférence, cet agent complexant est un acide carboxylique ayant de 2 à 15 atomes de carbone. Il peut notamment être choisi parmi :

- l'acide oxalique,
- les acides hydroxypolycarboxyliques, et plus particulièrement,
- les acides hydroxydi- ou hydroxytricarboxyliques tels que l'acide malique, l'acide citrique ou l'acide tartronique,
- les acides (polyhydroxy)monocarboxyliques tels que l'acide glucoheptonique et l'acide gluconique,
- les acides poly(hydroxycarboxyliques) tels que l'acide tartrique.

Les sels de ces acides sont également convenables pour l'invention tels que les sels de métaux alcalins, en particulier de sodium, et les sels d'ammonium.
En ce qui concerne les agents complexants de formule (I) à (III), on fait appel à un acide phosphorique organique de préférence aliphatique, substitué ou non. Celui-ci comprend 1 à 15 atomes de carbone, de préférence 1 à 10.
A titre d'exemples desdits composés, on peut citer :

- l'aminotriphosphonate de méthylène, l'éthylènediaminotétraphosphonate de méthylène, le triéthylènetétraaminohexaphosphonate de méthylène, le tétraéthylènepentaaminoheptaphosphonate de méthylène, le pentaéthylènehexaaminooctaphosphonate de méthylène,
- le diphosphonate de méthylène; de 1,1' éthylène; de 1,2 éthylène; de 1,1' propylène; de 1,3 propylène; de 1,6 hexaméthylène; le 2,4 dihydroxypentaméthylène - 2,4 diphosphonate; le 2,5 dihydroxyhexaméthylène - 2,5 disphosphonate ; le 2,3 dihydroxybutylène - 2,3 diphosphonate ; le 1 hydroxybenzyle - 1,1' diphosphonate ; le 1 aminoéthylène 1-1' diphosphonate ; l'hydroxyméthylène diphosphonate ; le 1 hydroxyéthylène 1,1' diphosphonate ; le 1 hydroxypropylène 1-1' diphosphonate ; le 1 hydroxybutylène 1-1' diphosphonate ; le 1 hydroxyhexaméthylène - 1,1' diphosphonate.

Pour ce qui est des agents complexants répondant à la formule (IV), on choisit de préférence un composé répondant à la formule (IV) dans laquelle R est un atome d'hydrogène ou un groupement aliphatique linéaire ou ramifié, saturé ou insaturé, ayant de préférence de 5 à 20 atomes de carbone.
D'une manière préférentielle, on fait appel à l'oxine (hydroxy-8 quinoléine) ou à une hydroxy-8 quinoléine de formule (IV) dans laquelle R est toujours un atome d'hydrogène, à l'exception de la position 7 sur le cycle où il représente un groupement alkyle de formule $C_mH_{2m+1}$ avec m compris entre 5 et 20.
L'agent complexant tel que défini est mis en oeuvre sous forme solide ou préférentiellement sous forme de solution aqueuse dont la concentration varie, de préférence, entre 0,01 et 1 mole/litre.
La quantité d'agent complexant introduite par rapport à la quantité d'alumine est déterminée de telle sorte qu'elle représente, de préférence, entre 0,01 et 5 % du poids d'alumine, et encore plus préférentiellement, entre 0,05 et 1 %.
L'agent complexant préféré est l'acide citrique. Il peut être utilisé à une teneur comprise entre 0,1 et 1 % en poids par rapport à l'alumine.
La suspension de l'alumine en présence de l'agent complexant du cation $Al^{3+}$ est réalisée en général à une concentration comprise entre 200 et 700 g/l d'alumine dans l'eau, de préférence à 500 g/l.
La température au cours de l'étape $\mathbf{b_1}$ peut varier entre 50 et 100 °C pendant une durée comprise entre quelques heures et 72 heures.
L'alumine mise en suspension est ensuite filtrée, on récupère un gâteau qui peut être lavé à l'eau.
L'alumine réhydratée est ensuite soumise, dans l'étape $\mathbf{c_1}$, à un malaxage en présence d'une émulsion d'au moins un hydrocarbure dans l'eau.

On peut éventuellement, entre les étapes **$b_1$** et **$c_1$**, sécher l'alumine réhydratée issue de l'étape **$b_1$**. Ce séchage doit être réalisé dans des conditions permettant d'éliminer l'eau dont est imprégnée l'alumine réhydratée mais sans éliminer l'eau liée à l'alumine, de ce fait la température de séchage est d'au plus 250 °C. On peut par exemple sécher le gâteau à une température comprise entre 60 et 150 °C. De préférence, on sèche le gâteau de manière à ce que la poudre d'alumine séchée présente une perte au feu mesurée par calcination à 1000°C comprise entre 20 et 40 %.

Au cours de l'étape **$c_1$**, on malaxe l'alumine réhydratée avec une émulsion d'au moins un hydrocarbure dans l'eau. Cette émulsion est obtenue par mélange dans l'eau de l'hydrocarbure et d'un agent tensio-actif.

Cet hydrocarbure peut être choisi parmi ceux présentant un nombre d'atomes de carbone compris entre 10 et 15 et une température d'ébullition comprise entre 185 et 200 °C tels que par exemple le pétrole lampant, l'huile de paraffine ou toute autre coupe d'alcanes, et leurs mélanges.

L'émulsion peut présenter un rapport en poids phase aqueuse/hydrocarbure d'au moins 1.

La quantité d'hydrocarbure, en émulsion dans l'eau, malaxée avec l'alumine réhydratée est en général d'au moins 5 % en poids par rapport au poids de l'alumine réhydratée, de préférence d'au moins 10 % et d'au plus 50 %.

Selon un mode préférentiel de mise en oeuvre du procédé selon l'invention, l'émulsion de pétrole dans l'eau comprend un agent tensio-actif non ionique.

Selon un mode particulièrement préféré, il s'agit des tensio-actifs non ioniques présentant des di-blocs oxyde d'éthylène (OE) - oxyde de propylène (OP), notamment ceux présentant un nombre de motifs OP d'au moins 10.

De préférence, l'agent tensio-actif est choisi parmi ceux pour lesquels l'émulsion d'hydrocarbure dans l'eau est stable en milieu acide. Pour vérifier cette propriété, on prépare une émulsion telle que définie ci-dessus par mélange et agitation d'eau, d'un hydrocarbure et du tensio-actif à tester, puis on y ajoute un acide. Si, on observe un phénomène de décantation par séparation des trois phases : eau/tensio-actif/hydrocarbure, l'émulsion n'est pas stable en milieu acide.

A ce titre, on peut notamment utiliser les tensio-actifs commerciaux : Galoryl EM 10 ® de la Compagnie Française des Produits Industriels, Soprophor SC138 ® commercialisé par Rhône-Poulenc Geronazzo.

En général, la teneur de l'émulsion en agent tensio-actif est d'au moins 3 % en poids par rapport à l'hydrocarbure, de préférence comprise entre 5 et 15 %.

L'émulsion est en général préparée par mise en contact des différents constituants (eau, hydrocarbures, agents tensio-actifs) puis agitation.

Selon un mode préférentiel de mise en oeuvre de l'invention, on malaxe l'alumine réhydratée et l'émulsion en milieu acide, notamment en présence d'acide nitrique. L'acide peut être introduit via l'émulsion.

Le malaxage peut être effectué par toute manière connue de l'homme du métier, et notamment à l'aide d'un malaxeur bras en Z ou un mélangeur bi-vis.

On peut ajouter de l'eau pour ajuster la viscosité de la pâte à extruder.

Lorsque le malaxage est réalisé en milieu acide, il est préférable de neutraliser la pâte à base d'alumine entre les étapes **$c_1$** et **$b_1$**. Cette neutralisation peut être effectuée à l'aide d'une base type ammoniaque. Le neutralisant est introduit habituellement à la fin du malaxage.

Lors de l'étape **$d_1$**, la pâte issue du malaxage est extrudée à travers une filière, par exemple à l'aide d'un piston ou d'une double vis d'extrusion. Cette étape d'extrusion peut être réalisée par toute méthode connue de l'homme du métier.

Puis, dans une étape **$e_1$**, à l'issue de la mise en forme, les extrudés d'alumine sont séchés, et calcinés. La température de séchage peut être comprise entre 100 et 200 °C, le température de calcination entre 200 et 700 °C.

Les extrudés issus de l'étape **$e_1$** sont ensuite soumis à un traitement hydrothermal acide en atmosphère confinée (étape **$f_1$**).

On entend par traitement hydrothermal en atmosphère confinée un traitement par passage à l'autoclave en présence d'eau sous une température supérieure à la température ambiante.

Au cours de ce traitement hydrothermal, on peut traiter de différentes manières l'alumine mise en forme. Ainsi, on peut imprégner l'alumine d'acide, préalablement à son passage à l'autoclave, l'autoclavage de l'alumine étant fait soit en phase vapeur, soit en phase liquide, cette phase vapeur ou liquide de l'autoclave pouvant être acide ou non. Cette imprégnation, préalable à l'autoclavage, peut être effectuée à sec ou par immersion de l'alumine dans une solution aqueuse acide. Par imprégnation à sec, on entend mise en contact de l'alumine avec un volume de solution inférieur ou égal au volume poreux total de l'alumine traitée. De préférence, l'imprégnation est réalisée à sec.

On peut également traiter les agglomérés sans imprégnation préalable par un acide, l'acidité étant dans ce cas apportée par le liquide aqueux de l'autoclave.

Le traitement hydrothermal est réalisé habituellement en présence d'une solution aqueuse acide constituée d'un mélange d'au moins un acide permettant de dissoudre au moins une partie de l'alumine de extrudés et d'au moins un composé apportant un anion capable de se combiner avec les ions aluminiums en solution. On entend par acide permettant de dissoudre au moins une partie de l'alumine des extrudés, tout acide qui, mis en contact avec les extrudés d'alumine, réalise la mise en solution d'au moins une partie des ions aluminium. L'acide doit, de préférence, dissoudre

au moins 0,5 % en poids d'alumine des extrudés d'alumine.

De préférence, cet acide est choisi parmi les acides forts tels que : l'acide nitrique, l'acide chlorhydrique, l'acide perchlorique, l'acide sulfurique ou un acides faible mis en oeuvre à une concentration telle que sa solution aqueuse présente un pH inférieur à 4, tel que l'acide acétique, ou un mélange de ces acides.

On entend par composé apportant un anion capacble de se combiner avec les ions aluminium en solution, tout composé capable de libérer en solution un anion $A^{-n}$ susceptible de former avec les cations $Al^{3+}$ des produits dans lesquels le rapport atomique $n \frac{A}{Al} \geq 3$.

Un cas particulier de ces sels peut être illustré par les sels basiques de formule générale $Al_2(OH)_xA_y$ dans laquelle $0 < x < 6$ ; $n\ y < 6$ ; n représente le nombre de charges de l'anion A. De préférence, les composés capables de libérer en solution les anions choisis parmi le groupe constitué par les anions nitrate, chlorure, sulfate, perchlorate, chloroacétate, dichloracétate, trichloracétate, bromoacétate, dibromoacétate et les anions de formule générale :

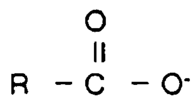

dans laquelle R représente un radical pris dans le groupe comprenant H, $CH_3$, $C_2H_5$, $CH_3CH_2CH_2$, $(CH_3)_2CH$. Les anions capables de libérer en solution l'anion $A^{-n}$ peuvent opérer cette libération, soit directement par dissociation, soit indirectement par exemple par hydrolyse. Les composés peuvent notamment être choisis parmi les groupes comportant : les acides minéraux ou organiques, les anhydrides, les sels organiques ou minéraux, les esters. Parmi les sels, on peut citer les sels alcalins ou alcalino-terreux solubles en milieu aqueux, comme ceux de sodium, de potassium, de magnésium ou de calcium, les sels d'ammonium, les sels d'aluminium, les sels de terres rares.

Selon un mode préféré, on réalise le traitement hydrothermal en présence d'un mélange d'acide nitrique et d'acide acétique. Les quantités respectives de ces deux acides sont en général comprises entre 3 et 15 % en poids.

L'autoclave est de préférence un autoclave à panier rotatif tel que celui défini dans la demande de brevet EP-A-0 387 109.

La température pendant l'autoclavage peut être comprise entre 150 et 250 °C pendant une période de temps comprise entre 30 minutes et 3 heures.

Le traitement peut être réalisé sous pression de vapeur saturante ou sous une pression partielle de vapeur d'eau au moins égale à 70 % de la pression de vapeur saturante correspondant à la température de traitement.

Ce traitement hydrothermal en atmosphère confinée conduit à la transformation d'au moins une partie de l'alumine sous forme de boehmite.

Le traitement hydrothermal doit être réalisé de telle manière, qu'à la fin de l'étape $\mathbf{f_1}$, l'alumine présente un taux d'alumine type boehmite d'au plus 70 % en poids, de préférence d'au moins 5 %. L'homme du métier sait comment ajuster les paramètres d'autoclavage permettant d'obtenir de tels taux.

Après l'étape de traitement hydrothermal $\mathbf{f_1}$, les extrudés sont éventuellement séchés, puis calcinés (étape $\mathbf{g_1}$). La température de séchage peut être comprise entre 100 et 200 °C et la température de calcination entre 200 et 700 °C.

L'invention concerne également un deuxième procédé de mise en forme d'une alumine, telle que décrite précédemment, à partir d'une alumine de départ issue de la déshydratation rapide d'hydrargillite telle que décrite précédemment, caractérisé en ce qu'il comprend les étapes suivantes :

$\mathbf{a_2}$. on part d'une alumine de départ issue de la déshydratation rapide d'hydrargillite,
$\mathbf{b_2}$. on met en forme l'alumine sous forme de billes en présence d'un porogène,
$\mathbf{c_2}$. on fait murir les billes d'alumine obtenues,
$\mathbf{d_2}$. on malaxe les billes issues de l'étape $\mathbf{c_2}$ ce par quoi on obtient une pâte que l'on extrude,
$\mathbf{e_2}$. on sèche et on calcine les extrudés obtenus,
$\mathbf{f_2}$. on soumet les extrudés issue de l'étape $\mathbf{e_2}$ à un traitement hydrothermal acide en atmosphère confinée,
$\mathbf{g_2}$. on sèche éventuellement, et on calcine les extrudés issus de l'étape $\mathbf{f_2}$.

Ce deuxième procédé de mise en forme selon l'invention convient également à une alumine de départ spécifique issue de la déshydratation rapide de l'hydrate de Bayer.

Au cours de l'étape $\mathbf{b_2}$, on met en forme l'alumine sous forme de billes.

Cette mise en forme peut être réalisée par toute technique connue de l'homme du métier. Elle s'effectue directement sur la poudre d'alumine par technologie tournante. On entend par technologie tournante tout appareil dans lequel l'agglomération est réalisée par mise en contact et rotation du produit à granuler sur lui-même. Comme appareil de ce type, on peut citer le drageoir tournant, le tambour tournant.

Cette mise en forme est réalisée en présence d'un porogène. Comme composés porogènes utilisés, on peut citer, à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues, et d'une manière générale tous les composés organiques suscpetibles d'être éliminés par calcination. La quantité de composés porogènes ajoutés n'est pas critique, leur taille non plus. En général, la quantité de porogènes est comprise entre 5 et 30 % en poids par rapport à l'alumine.

La taille des billes obtenues n'est pas critique. Elles est en général comprise entre 1 et 5 mm.

Les billes issues de l'étape $\mathbf{b_2}$ sont ensuite soumises à un mûrissement (étape $\mathbf{c_2}$). Ce mûrissement est réalisé par maintien des billes d'alumine dans une atmosphère à taux d'humidité contrôlée. La température peut être comprise entre 30 et 100 °C, de préférence entre 80 et 100 °C. La durée du mûrissement peut varier entre quelques heures et quelques dizaines d'heures, de préférence entre 6 et 24 heures.

Au cours de cette étape de mûrissement, l'alumine se réhydrate en boehmite ($Al_2O_3$, $H_2O$) et en bayerite ($Al_2O_3$, $3H_2O$).

Les conditions de mûrissement doivent être choisies pour obtenir le développement de la phase cristalline boehmite de l'alumine. A la fin de l'étape $\mathbf{c_2}$, le taux d'alumine type boehmite est, de préférence, compris entre 5 et 40 %, de préférence entre 20 à 30 % par rapport au poids de l'alumine.

Un mode de mise en oeuvre pratique du mûrissement consiste à injecter de la vapeur d'eau vive sur les billes d'alumine.

Lors de l'étape $\mathbf{d_2}$, les billes d'alumine mûries sont malaxées en présence d'eau et d'acide de manière à les briser et obtenir une pâte homogène extrudable. L'acide utilisé peut être un acide fort (acide nitrique par exemple) ou de l'acide acétique, formique, ...

La quantité d'acide par rapport à l'alumine est en général comprise ente 0,5 et 15 % en poids.

Le malaxage peut être effectué par toute manière connue de l'homme du métier, et notamment à l'aide d'un malaxeur bras en Z ou un mélangeur bi-vis.

Cette pâte est ensuite extrudée à travers une filière, par exemple à l'aide d'un piston ou d'une extrudeuse continue double vis ou monovis. Cette étape d'extrusion peut être réalisée par toute méthode connue de l'homme du métier. On ajuste la viscosité de la pâte à extruder par la quantité d'eau ajoutée au cours du malaxage.

Puis, dans une étape $\mathbf{e_2}$, à l'issue de l'extrusion, les extrudés sont séchés, et calcinés. La température de séchage peut être comprise comme précédemment entre 100 et 200 °C, la température de calcination entre 200 et 800 °C.

Les extrudés issus de l'étape $\mathbf{e_2}$ sont ensuite soumis à un traitement hydrothermal acide en atmosphère confinée (étape $\mathbf{f_2}$). Les conditions d'hydrotraitement sont identiques à celles définies pour le premier procédé de préparation décrit ci-dessus.

Après l'étape de traitement hydrothermal $\mathbf{f_2}$, les extrudés sont éventuellement séchés, puis calcinés (étape $\mathbf{g_2}$). La température de séchage peut être comprise, comme pour le premier procédé, entre 100 et 200 °C et la température de calcination entre 200 et 700 °C.

L'invention concerne également un troisième procédé de mise en forme d'une alumine, telle que décrite précédemment, à partir d'une alumine de départ issue de la déshydratation rapide d'hydrargillite telle que décrite précédemment, caractérisé en ce qu'il comprend les étapes suivantes :

$\mathbf{a_3}$. on part d'une alumine issue de la déshydratation rapide d'hydrargillite
$\mathbf{b_3}$. on réhydrate l'alumine de départ,
$\mathbf{c_3}$. on malaxe l'alumine réhydratée avec un gel de pseudo-boehmite, ledit gel étant présent dans une teneur comprise entre 1 et 30 % en poids par rapport à l'alumine réhydratée et au gel,
$\mathbf{d_3}$. on extrude la pâte à base d'alumine obtenue à l'étape $\mathbf{c_3}$,
$\mathbf{e_3}$. on sèche et on calcine les extrudés,
$\mathbf{f_3}$. on soumet les extrudés issue de l'étape $\mathbf{e_3}$ à un traitement hydrothermal acide en atmosphère confinée,
$\mathbf{g_3}$. on sèche éventuellement, et on calcine les extrudés issus de l'étape $\mathbf{f_3}$.

Ce procédé met en oeuvre des étapes identiques aux étapes $\mathbf{a_1}$, $\mathbf{b_1}$, $\mathbf{d_1}$, $\mathbf{e_1}$, $\mathbf{f_1}$ et $\mathbf{g_1}$ du premier procédé précédemment décrit.

Par contre, selon l'étape $\mathbf{c_3}$, l'alumine réhydratée issue de l'étape $\mathbf{b_3}$ est malaxée non pas avec une émulsion d'hydrocarbure, mais avec un gel de pseudo-boehmite dans une teneur comprise entre 1 et 30 % en poids par rapport à l'alumine réhydratée et au gel, de préférence entre 5 et 20 % en poids.

Un tel gel de pseudo-boehmite peut être obtenu par précipitation de sels d'aluminium tels que le chlorure d'aluminium, le sulfate d'aluminium, le nitrate d'aluminium, l'acétate d'aluminium avec une base ou par hydrolyse d'alcoxydes d'aluminium tels que le triéthoxyde d'aluminium.

Le malaxage peut être effectué par toute manière connue de l'homme du métier, et notamment à l'aide d'un

malaxeur bras en Z ou un mélangeur bi-vis.

On peut ajouter de l'eau pour ajuster la viscosité de la pâte à extruder.

Enfin, l'invention concerne l'utilisation des extrudés d'alumine précédemment décrits ou issus des procédés ci-dessus en tant que catalyseurs, supports de catalyseurs ou adsorbants.

Sur la figure 1, on observe sur la droite de la photo un empilement de feuillets entouré d'aiguilles. Cet empilement est entouré d'aiguilles sur sa partie gauche. On observe également la présence d'aiguilles à l'intérieur de l'empilement feuillets. L'échelle de la photographie est telle que 1 cm sur la photo représente 263 nm dans la réalité.

Sur la figure 2, on observe de nouveau un feuillet séparé des autres feuillets par des aiguilles. L'échelle de la photographie est telle que 1 cm sur la photo représente 79 nm dans la réalité.

Les exemples suivants illustrent l'invention sans toutefois en limiter la portée.

**EXEMPLES**

**EXEMPLES 1 à 3 - préparation de supports de catalyseur à base d'alumine selon le premier procédé de l'invention.**

**Etape $a_1$ - Alumine de départ -** La matière première est de l'alumine obtenue par décomposition très rapide de l'hydrargillite dans un courant d'air chaud (T = 1000 °C). Le produit obtenu est constitué d'alumines de transition : alumine $\chi$ (khi) et $\rho$ (rho). La surface spécifique est de 300 $m^2/g$ et la perte au feu (PAF) de 5 %.

**Etape $b_1$ - Réhydratation -** L'alumine est soumise à une réhydratation par mise en suspension dans l'eau à une concentration de 500 g/l à une température de 90 °C pendant une durée de 48 h en présence de 0,5 % d'acide citrique.

Après filtration de la suspension, on récupère un gâteau d'alumine qui est lavé à l'eau puis séché à une température de 140 °C pendant 24 h.

L'alumine obtenue est sous forme de poudre, sa perte au feu (PAF), mesurée par calcination à 1000°C, et son taux d'alumine sous forme boehmite, mesuré par diffraction RX, sont rassemblés dans le tableau 1.

**Etape $c_1$ - Malaxage -** On introduit 10 kg de la poudre réhydratée et séchée dans un malaxeur bras en Z de volume 25 l, puis on ajoute peu à peu une émulsion d'hydrocarbure dans l'eau stabilisée par un agent tensio-actif, préalablement obtenue dans un réacteur agité, et de l'acide nitrique à 69 %. Les caractéristiques sont rassemblées dans le tableau 1.

Le malaxage est prolongé jusqu'à l'obtention d'une pâte homogène consistante.

A la fin du malaxage, on ajoute une solution d'ammoniaque à 20 % de façon à neutraliser l'excès d'acide nitrique tout en poursuivant le malaxage pendant 3 à 5 min.

**Etape $d_1$ - Extrusion -** La pâte obtenue est introduite dans une extrudeuse monovis pour l'obtention d'extrudés crus de diamètre 1,6 mm.

**Etape $e_1$ - Séchage/calcination -** Les extrudés sont ensuite séchés à 140 °C pendant 15 h et calcinés pendant 2 h à une température indiquée dans le tableau 1. Le support ainsi calciné présente une surface spécifique ajustable entre 200 $m^2/g$ et 130 $m^2/g$ comme indiqué dans le tableau 1.

**Etape $f_1$ - Traitement hydrothermal -** Les extrudés obtenus sont imprégnés par une solution d'acide nitrique et d'acide acétique dans les concentrations suivantes : 3,5 % d'acide nitrique par rapport au poids d'alumine et 6,5 % d'acide acétique par rapport au poids d'alumine. Puis ils sont soumis à un traitement hydrothermal dans un autoclave à panier rotatif dans les conditions définies dans le tableau 1.

**Etape $g_1$ - Séchage/calcination -** A la fin de ce traitement les extrudés sont soumis à une calcination à une température de 550 °C pendant 2 h.

Les caractéristiques des extrudés obtenus sont rassemblées dans le tableau 1.

Le taux de boehmite est mesuré sur les extrudés avant calcination finale.

Tableau 1

| | Exemple 1 | Exemple 2 | Exemple 3 |
|---|---|---|---|
| **Alumine réhydratée - Fin étape a1** | | | |
| % boehmite | 24 | 31 | 33 |
| PAF (1000°C) | 25 | 25 | 25 |
| **Malaxage - Etape c1** | | | |
| Nature hydrocarbure | pétrole | pétrole | pétrole |

Tableau 1 (suite)

| | Exemple 1 | Exemple 2 | Exemple 3 |
|---|---|---|---|
| **Malaxage - Etape c1** | | | |
| % $HNO_3$ / $Al_2O_3$* | 10 | 7 | 10 |
| % hydrocarbure / $Al_2O_3$* | 15 | 15 | 5 |
| eau / hydrocarbure | 3,7 | 3,7 | 3,7 |
| Nature agent tensio-actif | Galoryl EM10® | Soprophor SC138® | Galoryl EM10® |
| % agent tensio-actif / hydrocarbure | 17 | 5 | 150 |
| Temps (h) | 2,15 | 2 | 2,15 |
| % neutralisation par rapport à $HNO_3$ en équiv. | 65 | 65 | 65 |
| **Séchage/calcination - Etape e1** | | | |
| Température calcination (°C) | 680 | 600 | 600 |
| Surface spécifique ($m^2/g$) | 148 | 174 | 182 |
| **Traitement** | **hydrothermal -** | **Etape f1** | |
| Température (°C) | 212 | 212 | 212 |
| Pression (bar) | 19 | 19 | 19 |
| Temps (h) | 2 | 2 | 2 |
| % boehmite | 40 | 62 | 45 |
| **Caractéristiques des extrudés calcinés obtenus** | | | |
| VPT ($cm^3/g$) | 0,80 | 0,85 | 0,86 |
| $V_{60-1000Å}$ ($cm^3/g$) | 0,60 | 0,59 | 0,62 |
| $V_{1000Å}$ ($cm^3/g$) | 0,19 | 0,22 | 0,28 |
| diam. moyen mésopores(Å) | 280 | 250 | 230 |
| $V_{0-60Å}$ ($cm^3/g$) | 0,02 | 0,03 | 0,01 |
| SS ($m^2/g$) | 140 | 138 | 147 |
| EGG (daN/mm) | 1,2 | 1,0 | 0,9 |
| ESH (MPa) | 1,58 | 1,30 | 1,2 |

* pourcentages donnés par rapport à l'alumine déshydratée

**EXEMPLES 4 à 6 - préparation de supports de catalyseur à base d'alumine selon le premier procédé de l'invention.**

On met en oeuvre les mêmes étapes que dans l'exemple 1 si ce n'est que l'étape c1 de malaxage est mise en oeuvre de la manière suivante.

**Etape $c_1$ - Malaxage -** Il s'agit d'un procédé continu en malaxeur bivis corrotatives.

En amont du malaxeur, on introduit la poudre réhydratée et séchée à un débit de 90 kg/h. Dans un réacteur agité, on prépare une émulsion de pétrole dans l'eau, en introduisant :

- 5,46 kg d'eau,
- 10,04 kg d'acide nitrique à 69 %,
- 10,4 kg de pétrole,
- 1,56 kg de Soprophor SC138.

Cette émulsion est introduite à raison de 27,46 kg/h dans le fourreau de la machine bivis qui suit immédiatement l'introduction de la poudre d'alumine.

En fin de machine, on introduit une solution d'ammoniaque à 28 % à raison de 4,34 kg/h.

Le temps de passage de la poudre dans la machine est de l'ordre de 50 à 60 s.

A la sortie de la machine, on obtient une pâte homogène qui peut être extrudée.

Tableau 2

| | Exemple 4 | Exemple 5 | Exemple 6 |
|---|---|---|---|
| **Alumine réhydratée - Fin étape $b_1$** | | | |
| % boehmite | 33 | 33 | 33 |
| PAF (1000°C) | 23 | 23 | 23 |
| **Malaxage - Etape $c_1$** | | | |
| Nature hydrocarbure | pétrole | pétrole | pétrole |
| $\%HNO_3 / Al_2O_3$* | 10 | 10 | 10 |
| % hydrocarbure / $Al_2O_3$* | 15 | 15 | 15 |
| eau / hydrocarbure | 2,6 | 2,6 | 2,6 |
| Nature agent tensio-actif | Soprophor SC138® | Soprophor SC138® | Soprophor SC138® |
| % agent tensio-actif / hydrocarbure | 15 | 15 | 15 |
| % neutralisation par rapport à $HNO_3$ en équiv. | 65 | 65 | 65 |
| **Séchage/calcination - Etape e1** | | | |
| Température calcination (°C) | 600 | 600 | 600 |
| Surface spécifique ($m^2$/g) | 177 | 177 | 177 |
| **Traitement** | **hydrothermal -** | **Etape $f_1$** | |
| Température (°C) | 190 | 202 | 178 |
| Pression (bar) | 13 | 16 | 10 |
| Temps (h) | 2 | 2 | 2 |
| % boehmite | 21 | 43 | 9 |
| **Caractéristiques des extrudés calcinés obtenus** | | | |
| VPT ($cm^3$/g) | 0,66 | 0,66 | 0,64 |
| $V_{60\text{-}1000Å}$ ($cm^3$/g) | 0,64 | 0,66 | 0,50 |
| $V_{1000Å}$ ($cm^3$/g) | < 0,02 | < 0,02 | < 0,02 |
| diam. moyen mésopores(Å) | 185 | 245 | 160 |
| V0-60Å ($cm^3$/g) | 0,02 | 0,01 | 0,14 |
| SS ($m^2$/g) | 172 | 152 | 174 |
| EGG (daN/mm) | 0,8 | 1,1 | 0,7 |
| ESH (MPa) | 1,14 | 1,58 | 1,45 |

* pourcentages donnés par rapport à l'alumine déshydratée

**EXEMPLES 7 à 11 - préparation de supports de catalyseur à base d'alumine selon le deuxième procédé de l'invention**

**Etape $a_2$ - Alumine de départ -** On utilise la même alumine que dans l'exemple 1.

**Etape $b_2$ - Formation de billes -**

L'alumine est mélangée avec de la farine de bois comme porogène (20 % en poids par rapport à l'alumine),

puis mise en forme dans un granulateur à bol tournant. Pour permettre cette mise en forme, on ajoute de l'eau. Les billes d'alumine obtenues présentent un diamètre compris entre 1,5 et 4 mm.

**Etape $c_2$ - Mûrissement des billes -**

Ces billes sont soumises à un mûrissement par passage de vapeur d'eau, la température des billes imposée est de 90 °C pendant 20 h. Les billes obtenues présentent une perte au feu de 47,5 % et contiennent 25 % en poids de boehmite.

**Etape $d_2$ - Malaxage/extrusion -** Le procédé de malaxage utilisé est un procédé continu dans un malaxeur bivis corrotatives.

En amont du malaxeur, on introduit les billes d'alumine à un débit de 90 kg/h.

Dans le fourreau qui suit immédiatement l'introduction des billes mûries, on introduit une solution d'acide nitrique à 2.42 % à un débit de 10,9 kg/h.

En fin de machine, on introduit une solution d'ammoniaque à 2,1 % à un débit de 4,2 kg/h.

Le temps de passage de la matière dans la machine est de l'ordre de 50 s.

A la sortie du malaxeur, on obtient une pâte d'alumine homogène qui peut être extrudée.

On extrude la pâte obtenue à travers une filière présentant des orifices de diamètre 1,6 mm.

**Etape $e_2$ - Séchage/calcination -** Les extrudés sont ensuite séchés à 140 °C pendant 2 h et calcinés pendant 2 h à une température de calcination indiquée dans le tableau 3. Les extrudés ainsi calcinés présentent une surface spécifique qui est ajustée entre 120 et 200 $m^2/g$.

**Etape $f_2$ - Traitement hydrothermal -** Les extrudés obtenus sont imprégnés par une solution d'acide nitrique et d'acide acétique dans les concentrations suivantes : 3,5 % d'acide nitrique par rapport au poids d'alumine et 6,5 % d'acide acétique par rapport au poids d'alumine. Puis ils sont soumis à un traitement hydrothermal dans un autoclave à panier rotatif dans les conditions définies dans le tableau 3.

**Etape $g_2$ - Séchage/calcination -** A la fin de ce traitement les extrudés sont soumis à une calcination à une température de 550°C pendant 2 h.

Les caractéristiques des extrudés obtenus sont rassemblées dans le tableau 3.

Le taux de boehmite est mesuré sur les extrudés avant calcination finale.

Tableau 3

| | Exemple 7 | Exemple 8 | Exemple 9 | Exemple 10 | Exemple 11 |
|---|---|---|---|---|---|
| **Séchage/calcination - Etape e2** | | | | | |
| Température calcination (°C) | 650 | 700 | 750 | 650 | 550 |
| Surface spécifique ($m^2/g$) | 167 | 140 | 130 | 164 | 202 |
| **Traitement hydrothermal - Etape f2** | | | | | |
| Température (°C) | 214 | 204 | 220 | 178 | 178 |
| Pression (bar) | 16,5 | 16 | 22 | 10 | 10 |
| Temps (h) | 2 | 2 | 2 | 2 | 2 |
| % boehmite | 43 | 30 | 69 | 8 | 18 |
| **Caractéristiques des extrudés calcinés obtenus** | | | | | |
| VPT ($cm^3/g$) | 0,79 | 0,81 | 0,83 | 0,73 | 0,72 |
| $V_{60-1000Å}$ ($cm^3/g$) | 0,65 | 0,66 | 0,60 | 0,54 | 0,54 |
| $V_{1000Å}$ ($cm^3/g$) | 0,14 | 0,15 | 0,18 | 0,13 | 0,09 |
| diam. moyen mésopores(Å) | 240 | 250 | 360 | 160 | 170 |
| $V_{0-60Å}$ ($cm^3/g$) | 0 | 0 | 0 | 0,06 | 0,09 |
| SS ($m^2/g$) | 151 | 141 | 121 | 161 | 184 |
| EGG (daN/mm) | 0,90 | 0,90 | 0,8 | 1,1 | 1,5 |
| ESH (MPa) | 1,37 | 1,24 | 1,43 | 1,37 | 1,0 |

**EXEMPLE 12 - Tests catalytiques**

**Préparation des catalyseurs**

♦ Catalyseurs A

Les extrudés de l'exemple 1 précédent sont imprégnés à sec par une solution aqueuse renfermant des sels de nickel et de molybdène. Le sel de nickel est le nitrate de nickel $Ni(NO_3)_2.6H_2O$ et le sel de molybdène l'heptamolybdate d'ammonium $Mo_7O_{24}(NH_4)_6.4H_2O$.
Après maturation à température ambiante dans une atmosphère saturée en eau, les extrudés imprégnés sont séchés une nuit à 120°C, puis calcinés à 550°C pendant 2 heures sous air. La teneur finale en $MoO_3$ est de 6,5 % en poids, et celle de NiO de 1,4 % en poids.

♦ Catalyseurs B

Les extrudés de l'exemple 5 précédent sont imprégnés à sec par une solution aqueuse renfermant des sels de nickel et de molybdène. Le sel de nickel est le nitrate de nickel $Ni(NO_3)_2.6H_2O$ et le sel de molybdène l'heptamolybdate d'ammonium $Mo_7O_{24}(NH_4)_6.4H_2O$.
Après maturation à température ambiante dans une atmosphère saturée en eau, les extrudés imprégnés sont séchés une nuit à 120°C, puis calcinés à 550°C pendant 2 heures sous air. La teneur finale en $MoO_3$ est de 12,5 % en poids, et celle de NiO de 3,0 % en poids.

♦ Catalyseurs C

Les extrudés de l'exemple 8 précédent sont imprégnés à sec par une solution aqueuse renfermant des sels de nickel et de molybdène. Le sel de nickel est le nitrate de nickel $Ni(NO_3)_2.6H_2O$ et le sel de molybdène l'heptamolybdate d'ammonium $Mo_7O_{24}(NH_4)_6.4H_2O$.
Après maturation à température ambiante dans une atmosphère saturée en eau, les extrudés imprégnés sont séchés une nuit à 120°C, puis calcinés à 550°C pendant 2 heures sous air. La teneur finale en $MoO_3$ est de 11,8 % en poids, et celle de NiO de 2,5 % en poids.

♦ Catalyseurs D comparatifs

On prépare des billes d'alumine à partir de l'alumine de départ de l'exemple 1. L'alumine est broyée avec un broyeur à boulets pour obtenir une poudre dont le diamètre moyen des particules est de 7 µm.
Cette alumine est mélangée avec de la farine de bois comme porogène (15 % en poids), puis mise en forme dans un drageoir tournant. Pour permettre cette mise en forme, on ajoute de l'eau.
Les billes obtenues sont séchées et calcinées.
Ces billes sont ensuite soumises à une étape de maturation par passage de vapeur d'eau à 100°C pendant 24 heures.
Puis, on les immerge dans une solution d'acide acétique à 50 g/l pendant environ 5 heures. Elles sont alors retirées, égouttées et introduites dans un autoclave pendant 2 heures à une température de 210°C sous une pression de 20,5 bars.
En sortie d'autoclave, les billes sont séchées pendant 4 heures à 100°C et calcinées pendant 2 heures à 650°C.
Les billes de granulométrie comprise entre 1,2 et 2,8 mm sont sélectionnées.
Les billes précédentes sont imprégnées à sec par une solution aqueuse renfermant des sels de nickel et de molybdène. Le sel de nickel est le nitrate de nickel $Ni(NO_3)_2.6H_2O$ et le sel de molybdène l'heptamolybdate d'ammonium $Mo_7O_{24}(NH_4)_6.4H_2O$.
Après maturation à température ambiante dans une atmosphère saturée en eau, les extrudés imprégnés sont séchés une nuit à 120°C, puis calcinés à 550°C pendant 2 heures sous air. La teneur finale en $MoO_3$ est de 11,0 % en poids, et celle de NiO de 2,6 % en poids.
Les caractéristiques des catalyseurs D sont les suivantes :

- VPT : 0,97 $cm^3/g$
- V60-1000Å : 0,66 $cm^3/g$
- V1000Å : 0,31 $cm^3/g$
- diamètre moyen des mésopores : 250 A

- V0-60Å : 0 $cm^3/g$
- SS : 119 $m^2/g$
- ESH : 1,48 MPa

**Tests**

Les catalyseurs obtenus sont soumis à un test hydrotraitement de différents résidus pétroliers. Il s'agit en premier lieu d'un résidu atmosphérique (RA) d'origine Moyen-Orient (Arabian Light) et d'autre part d'un résidu atmosphérique de brut extra lourd vénézuélien (Boscan). Ces deux résidus sont caractérisés par des viscosités élevées, des fortes teneurs en carbone Conradson et asphaltènes. Le RA Boscan contient en plus des teneurs très élevées en nickel et en vanadium. Les caractéristiques de ces résidus sont résumées dans le tableau 4.

Tableau 4

| | Unité | RA Arabian Light S4658 | RA Boscan S3345 |
|---|---|---|---|
| Densité 15/4 | | 0,959 | 1,023 |
| Viscosité à 100°C | $m^2/s$ | $25,6.10^{-6}$ | $1380.10^{-6}$ |
| Viscosité à 150°C | $m^2/s$ | $7,66.10^{-6}$ | 120.10-6 |
| Masse moléculaire | g/mol | 460 | 730 |
| Teneur en soufre | % en poids | 3,3 | 5,5 |
| Teneur en azote | ppm en poids | 2075 | 5800 |
| Teneur en nickel | ppm en poids | 9 | 125 |
| Teneur en vanadium | ppm en poids | 35 | 1290 |
| Teneur en fer | ppm en poids | 1 | 8 |
| Teneur en carbone | % en poids | 84,7 | 83,40 |
| Teneur en hydrogène | % en poids | 11,2 | 10,02 |
| Teneur en carbone aromatique | % en poids | 26 | 29,0 |
| Teneur en carbone conradson | % en poids | 9,5 | 16,9 |
| Teneur en asphaltènes C5 | % en poids | 5,6 | 24,1 |
| Teneur en asphaltènes C7 | % en poids | 3,1 | 14,9 |
| SARA: | | | |
| Saturés | % en poids | 30,7 | 8,7 |
| Aromatiques | % en poids | 47,5 | 35,0 |
| Résines | % en poids | 17,6 | 34,0 |
| Asphaltènes | % en poids | 3,0 | 14,6 |
| Distillation simulée | | | |
| PI | °C | 229 | 224 |
| 5 % | °C | 325 | 335 |
| 10% | °C | 358 | 402 |
| 20 % | °C | 404 | 474 |
| 30 % | °C | 436 | 523 |
| 40 % | °C | 468 | 566 |
| 50 % | °C | 503 | |
| 60 % | °C | 543 | |

Tableau 4 (suite)

| | Unité | RA Arabian Light S4658 | RA Boscan S3345 |
|---|---|---|---|
| 70 % | °C | 590 | |
| 80 % | °C | 642 | |

Le test est mené dans une unité pilote d'hydrotraitement de résidus pétroliers comportant un réacteur tubulaire en lit fixe. Le réacteur est rempli avec un litre de catalyseur. L'écoulement des fluides (résidu pétrolier + recyclage d'hydrogène) est ascendant dans le réacteur. Ce type d'unité pilote est représentatif du fonctionnement de l'un des réacteurs de l'unité HYVAHL de l'Institut Français du Pétrole d'hydroconversion de résidus en lits fixes.

Après une étape de sulfuration par circulation dans le réacteur d'une coupe gazole additionnées de diméthyldisulfonate (DMDS) à une température finale de 350°C, on opère l'unité avec les résidus pétroliers décrits ci-dessus dans les conditions opératoires suivantes :

- pression totale 15 MPa
- température : 380°C
- vitesse spatiale horaire du résidu 0,5 $m^3$ de charge / $m^3$ de réacteur / $h^{-1}$
- recyclage d'hydrogène : 1000 std l. $H_2$/l. charge
- température de début de cycle : 370°C

On commence par injecter le RA Arabian Light. Après une période de stabilisation de 250 heures, les performances en hydrodésulfuration (HDS) et en hydrodémétallation (HDM) sont les suivantes :

Tableau 5

| Catalyseur | HDS (% en poids) | HDM (% en poids) |
|---|---|---|
| A | 66 | 78 |
| B | 68 | 75 |
| C | 65 | 77 |
| D comparatif | 60 | 75 |

Le taux d'hydrodésulfuration est défini de la manière suivante :

$$\text{HDS (\% en poids)} = 100 \text{ X } [(\text{\% en poids S})_{charge} - (\text{\% en poids S})_{recette}] / (\text{\% en poids S})_{charge}$$

Le taux d'hydrodémétallation est défini de la manière suivante :

$$\text{HDM (\% en poids)} = 100 \text{ X } [(\text{ppm Ni + V})_{charge} - (\text{ppm en poids Ni + V})_{recette}] / (\text{ppm en poids Ni + V})_{charge}$$

On procède ensuite au changement de charge par passage du RA Boscan. La conduite du test vise à maintenir un taux d'HDM constant autour de 80 % en poids tout au long du cycle. Pour cela, on compense la désactivation du catalyseur par une augmentation progressive de la température réactionnelle. On arrête le test lorsque la température réactionnelle atteint 420°C, température considérée comme représentative de la température de fin de cycle d'une unité industrielle d'hydroconversion de résidus.

Les quantités de nickel et vanadium en provenance du RA Boscan déposées sur les catalyseurs et les performances en hydrodésulfuration sont les suivantes :

Tableau 6

| Catalyseur | Ni + V déposés (% de la masse de catalyseur frais) | HDS en milieu de cycle (% en poids) |
|---|---|---|
| A | 80 | 52 |
| B | 35 | 58 |

Tableau 6 (suite)

| Catalyseur | Ni + V déposés (% de la masse de catalyseur frais) | HDS en milieu de cycle (% en poids) |
|---|---|---|
| C | 82 | 54 |
| D comparatif | 80 | 50 |

Il apparaît donc que les catalyseurs sous forme d'extrudés de la présente invention peuvent conduire à des performances en HDS supérieures à celles du catalyseur comparatif D tout en assurant des performances identiques à la fois en HDM et en rétention en métaux nickel + vanadium. Des performances en HDS supérieures sont observées à la fois sur un résidu atmosphérique arabe léger et Boscan.

## Revendications

1. Extrudés d'alumine, **caractérisés en ce qu'**ils sont issus d'un procédé de mise en forme comprenant notamment soit les étapes suivantes :

   - a1 ou a3: on part d'une alumine issue de la déshydratation rapide d'hydrargillite.
   - b1 ou b3: on réhydrate l'alumine de départ.
   - c1: on malaxe l'alumine réhydratée en présence d'une émulsion d'au moins un hydrocarbure dans l'eau ou bien c3: on malaxe l'alumine réhydratée avec un gel de pseudo-boehmite ledit gel étant présent dans une teneur comprise entre 1 et 30% en poids par rapport à l'alumine réhydratée et au gel, pour obtenir une pâte.
   - d1 ou d3: on extrude la pâte à base d'alumine obtenue.
   - e1 ou e3: on sèche et on calcine les extrudés,
   - f1 ou f3: on soumet les extrudés calcinés à un traitement hydrothermal acide en atmosphère confinée,
   - g1 ou g3: on sèche et calcine les extrudés issus dudit traitement hydrothermal acide en atmosphère confinée,

   soit les étapes ci-après:

   - $a_2$ on part d'une alumine issue de la déshydratation rapide d'hydrargillite.
   - $b_2$. on met en forme l'alumine sous forme de billes en présence d'un porogène,
   - $c_2$. on fait murir les billes d'alumine obtenues,
   - $d_2$. on malaxe les billes issues de l'étape $c_2$ ce par quoi on obtient une pâte que l'on extrude,
   - $e_2$. on sèche et on calcine les extrudés obtenus,
   - $f_2$. on soumet les extrudés issue de l'étape $e_2$ à un traitement hydrothermal acide en atmosphère confinée,
   - $g_2$. on sèche et calcine les extrudés issus de l'étape $f_2$,

   et caractérisés également **en ce qu'**ils présentent un volume poreux total d'au moins 0,6 $cm^3/g$, un diamètre moyen mésoporeux compris entre 140 et 360 Å, un taux d'alumine issue de la décomposition de boehmite compris entre 5 et 70 % en poids, caractérisés également **en ce qu'**ils présentent un volume mésoporeux ($V_{60Å}$ - $V_{1000Å}$) d'au moins 0,3 $cm^3/g$, voire d'au moins 0,5 $cm^3/g$, un volume macroporeux ($V_{1000Å}$) d'au plus 0,5 $cm^3/g$, un volume microporeux ($V_{0-60Å}$) d'au plus 0,55 $cm^3/g$ et une surface spécifique d'au moins 120 $m^2/g$, ces extrudés se présentant microscopiquement en partie sous la forme d'empilements de feuillets et en partie sous la forme d'aiguilles, lesdites aiguilles étant dispersées à la fois autour des empilements de feuillets et entre les feuillets.

2. Extrudés d'alumine selon la revendication 1, issus d'un procédé de préparation comprenant les étapes a1, b1, c1, d1, e1, f1, g1, et dans lequel l' alumine issue de l'étape b1 comprend au moins 3% poids de boehmite,

3. Extrudés d'alumine selon l'une des revendications 1 et 2, issus d'un procédé de préparation comprenant les étapes a1, b1, c1, d1, e1, f1, g1 ou bien les étapes a2, b2, c2, d2, e2, f2, g2, **caractérisés en ce que**, dans leur procédé de préparation, le malaxage c1 ou d2 est opéré en présence d'eau et d'acide, par exemple d'acide nitrique,

4. Procédé de préparation d'extrudés d'alumine selon l'une des revendications 1 à 3, **caractérisé en ce qu'**il comprend les étapes a1, b1, c1, d1, e1, f1, g1.

5. Procédé selon la revendication 4, **caractérisé en ce qu'**au cours de l'étape $b_1$, on réhydrate l'alumine de départ de manière à ce qu'elle présente un taux d'alumine type boehmite d'au moins 3 % en poids, de préférence d'au

plus 40 % en poids.

6. Procédé selon l'une quelconque des revendications 4 ou 5, **caractérisé en ce qu'**au cours de l'étape $b_1$, on réhydrate l'alumine de départ par mise en suspension dans l'eau en présence d'acide citrique.

7. Procédé selon l'une quelconque des revendications 4 à 6, **caractérisé en ce que** l'émulsion de pétrole dans l'eau comprend un agent tensio-actif non ionique choisi parmi les tensio-actifs non ioniques présentant des di-blocs oxyde d'éthylène (OE) - oxyde de propylène (OP), de préférence présentant un nombre de motifs OP d'au moins 10.

8. Procédé selon la revendication 7, **caractérisé en ce que** l'agent tensio-actif est choisi parmi ceux pour lesquels l'émulsion d'hydrocarbure dans l'eau est stable en milieu acide.

9. Procédé selon l'une quelconque des revendications 4 à 8, **caractérisé en ce que** la teneur de l'émulsion en agent tensio-actif est d'au moins 3 % en poids par rapport à l'hydrocarbure.

10. Procédé selon l'une quelconque des revendications 4 à 9, **caractérisé en ce qu'**on malaxe l'alumine réhydratée et l'émulsion en présence d'acide nitrique.

11. Procédé selon la revendication 8, **caractérisé en ce qu'**on neutralise la pâte à base d'alumine entre les étapes $c_1$ et $d_1$.

12. Procédé selon l'une quelconque des revendications 4 à 11, **caractérisé en ce qu'**on réalise le traitement hydrothermal en présence d'un mélange d'acide nitrique et d'acide acétique.

13. Procédé selon l'une quelconque des revendications 4 à 12, **caractérisé en ce que** le traitement hydrothermal est réalisé de telle manière, qu'à la fin de l'étape $f_1$, l'alumine présente un taux d'alumine type boehmite d'au plus 70 % en poids, de préférence d'au moins 5 %.

14. Procédé de préparation d'extrudés d'alumine, selon l'une des revendications 1 à 3, **caractérisé en ce qu'**il comprend les étapes <u>a2, b2, c2, d2, e2, f2, g2,</u>

15. Procédé selon la revendication 14, **caractérisé en ce qu'**au cours de l'étape $c_2$, on fait mûrir les billes d'alumine par un traitement sous vapeur d'eau à une température comprise entre 30 et 100 °C.

16. Procédé selon l'une des revendications 14 ou 15, **caractérisé en ce qu'**à la fin de l'étape $c_2$, le taux d'alumine type boehmite est compris entre 5 et 40 %, de préférence entre 20 à 30 % par rapport au poids de l'alumine.

17. Procédé selon l'une quelconque des revendications 14 à 16, **caractérisé en ce qu'**on réalise le traitement hydrothermal $f_2$ en présence d'un mélange d'acide nitrique et d'acide acétique.

18. Procédé selon l'une quelconque des revendications 14 à 17, **caractérisé en ce que** le traitement hydrothermal est réalisé de telle manière, qu'à la fin de l'étape $f_2$, l'alumine présente un taux d'alumine type boehmite d'au plus 70 % en poids, de préférence d'au moins 5 %.

19. Procédé de préparation d'extrudés d'alumine, selon la revendication 1 **caractérisé en ce qu'**il comprend les étapes <u>a3, b3, c3, d3, e3, f3, g3,</u>

20. Utilisation des extrudés selon l'une des revendications 1 à 3, ou susceptibles d'être issus du procédé selon l'une des revendications 4 à 19 en tant que support de catalyseur, catalyseur ou adsorbant.

## Claims

1. Alumina extrudates, **characterized in that** they issue from a preparation process comprising in particular:

   either the following steps:

   - a1 or a3: starting with an alumina originating from rapid dehydration of hydrargillite;

- $b_1$ or $b_3$: rehydrating the starting alumina;
- $c_1$ mixing the rehydrated alumina in the presence of an emulsion of at least one hydrocarbon in water, or c3: mixing the rehydrated alumina with a pseudo-boehmite gel, said gel being present in an amount in the range 1% to 30% by weight with respect to the rehydrated alumina and the gel, so as to obtain a paste;
- $d_1$ or $d_3$: extruding the alumina-based paste obtained;
- $e_1$ or $e_3$: drying and calcining the extrudates;
- $f_1$ or $f_3$: carrying out a hydrothermal acid treatment in a confined atmosphere on the calcined extrudates;
- g1 or g3: drying and calcining the extrudates from said hydrothermal acid treatment in a confined atmosphere;

or the following steps:

- $a_{2:}$ starting from an alumina originating from rapid dehydration of hydrargil lite;
- $b_{2:}$ forming the alumina into beads in the presence of a pore-forming agent;
- $c_{2:}$ ageing the alumina beads obtained;
- $d_{2:}$ mixing the beads from step $c_2$ to obtain a paste which is extruded;
- e2: drying and calcining the extrudates obtained;
- $f_{2:}$ carrying out a hydrothermal acid treatment in a confined atmosphere on the extrudates from step $e_{2;}$
- $g_{2:}$ drying and calcining the extrudates from step f2,

and also **characterized in that** they have, a total pore volume of at least 0.6 $cm^3/g$, an average diameter of mesopores in the range 140 to 360 A, a ratio of alumina from boehmite decomposition in the range 5% to 70% by weight, also **characterized in that** they have a mesoporous volume ($V_{60A}$ - $V_{1000A}$) of at least 0.3 $cm^3/g$ or even at least 0.5 $cm^3/g$ , a macroporous volume ($V_{1000A}$) of at most 0.5 $cm^3/g$, a microporous volume ($V_{0\text{-}60A}$) of at most 0.55 $cm^3/g$, and a specific area of at least 120 $m^2/g$, said extrudates being at microscopic scale partly in the form of packs of flakes and partly in the form of needles, said needles being dispersed both about the packs of flakes and between the flakes.

**2.** Alumina extrudates according to claim 1, issued from a preparation process comprising the steps a1, b1, c1, d1, e1, f1, g1, and in which alumina from step b1 comprise at least 3% by weight of boehmite.

**3.** Alumina extrudates according to claim 1 or 2, issued from a preparation process comprising the steps a1, b1, c1, d1, e1, f1, g1, or the steps a2, b2, c2, d2, e2, f2, g2, **characterized in that**, in their preparation process, the mixing c1 or d2 is done in the presence of water and acid, for example nitric acid.

**4.** A process for preparing alumina extrudates according to one of claims 1 to 3, **characterized in that** it comprises the following steps: a1, b1, c1, d1, e1, f1, g1.

**5.** A process according to claim 4, **characterized in that** during step b1, alumina is rehydrated such that it has a boehmite type alumina content of at least 3% by weight, preferably at most 40% by weight.

**6.** A process according to any one of claims 4 or 5, **characterized in that** during step b1, the starting alumina is rehydrated by suspending in water in the presence of citric acid.

**7.** A process according to any one of claims 4 to 6, **characterized in that** the emulsion of petroleum-in-water comprises a non ionic surfactant selected from non ionic surfactants with ethylene oxide (FO) - propylene oxide (PO) double blocks, in particular those containing at least 10 PO motifs.

**8.** A process according to claim 7, **characterized in that** the surfactant is selected from those for which the hydrocarbon-in-water emulsion is stable in an acid medium.

**9.** A process according to any one of claims 4 to 8, **characterized in that** the amount of surfactant in the emulsion is at least 3% by weight with respect to the hydrocarbon.

**10.** A process according to any one of claims 4 to 9, **characterized in that** the rehydrated alumina and the emulsion are mixed in the presence of nitric acid.

**11.** A process according to claim 8, **characterized in that** the alumina-based paste is neutralised between steps $c_1$

and $d_1$.

**12.** A process according to any one of claims 4 to 11, **characterized in that** the hydrothermal treatment is carried out in the presence of a mixture of nitric acid and acetic acid.

**13.** A process according to any one of claims 4 to 12, **characterized in that** the hydrothermal treatment is carried out such that at the end of step $f_1$, the boehmite type alumina content is at most 70% by weight, preferably at least 5%.

**14.** A process for preparing alumina extrudates according to one of claims 1 to 3, **characterized in that** it comprises the following steps: a2, b2, c2, d2, e2, f2, g2.

**15.** A process according to claim 14, **characterized in that** during step $c_2$, the alumina beads are aged by treatment in water vapour at a temperature in the range 30°C to 100°C.

**16.** A process according to claim 14 or claim 15, **characterized in that** at the end of step $c_2$, the boehmite type alumina content is in the range 5% to 40%, preferably in the range 20% to 30% with respect to the weight of the alumina.

**17.** A process according to any one of claims 14 to 16, **characterized in that** the hydrothermal treatment step $f_2$ is carried out in the presence of a mixture of nitric acid and acetic acid.

**18.** A process according to any one of claims 14 to 17, **characterized in that** the hydrothermal treatment is carried out such that at the end of step $f_2$, the boehmite alumina type content is at most 70% by weight, preferably at least 5%.

**19.** A process for preparing alumina extrudates according to of claim 1, **characterized in that** it comprises the following steps: a3, b3, c3, d3, e3, f3, g3.

**20.** Use of the extrudates from one of claims 1 to 3, or that can issue from the process according to one of claims 4 to 19 as a catalyst support, a catalyst, or an adsorbent.

**Patentansprüche**

**1.** Aluminiumoxidextrudate, **dadurch gekennzeichnet, dass** sie aus einem Formungsverfahren stammen, das insbesondere umfasst entweder die folgenden Stufen:

- a1 oder a3: man geht von einem Aluminiumoxid aus der schnellen Dehydratisierung von Hydrargilit aus.
- b1 oder b3: man rehydratisiert das Ausgangs-Aluminiumoxid.
- c1: man knetet das rehydratisierte Aluminiumoxid in Gegenwart einer Emulsion von wenigstens einem Kohlenwasserstoff in Wasser oder auch c3: man knetet das rehydratisierte Aluminiumoxid mit einem Pseudo-Boehmitgel, wobei das Gel in einem Gehalt vorliegt, der zwischen 1 und 30 Gew.-% im Verhältnis zum rehydratisierten Aluminiumoxid und dem Gel I liegt, um eine Paste zu erhalten.
- d1 oder d3: man extrudiert die erhaltene Paste auf Basis von Aluminiumoxid.
- e1 oder e3: man trocknet und man kalziniert die Extrudate,
- f1 oder f3: man unterzieht die kalzinierten Extrudate einer sauren hydrothermischen Behandlung in einer eingeschlossenen Atmosphäre, oder die nachfolgenden Stufen
- a2 man geht von einem Aluminiumoxid aus der schnellen Dehydratisierung von Hydrargilit aus.
- b2: man formt das Aluminiumoxid in Form von Kugeln in Gegenwart eines Porogens,
- c2: man lässt die erhaltenen Aluminiumoxidkugeln reifen,
- d2 man knetet die Kugeln aus der Stufe c2, weshalb man eine Paste erhält, die man extrudiert,
- e2 man trocknet und kalziniert die erhaltenen Extrudate,
- f2 man unterzieht die Extrudate aus der Stufe e2 einer sauren hydrothermalen Behandlung in eingeschlossener Atmosphäre,
- g2 man trocknet und man kalziniert die Extrudate aus der Stufe f2,

und auch **dadurch gekennzeichnet, dass** sie ein Gesamtporenvolumen von wenigstens 0,6 $cm^3/g$, einen mittleren Mesoporendurchmesser zwischen 140 und 360 Å aufweisen, ein Aluminiumoxidgehalt aus der Zersetzung von Boehmit zwischen 5 und 70 Gew.-%, **dadurch gekennzeichnet, dass** sie ein Mesoporenvolumen ($V_{60Å}$ -

$V_{1000Å}$) von wenigstens 0,3 $cm^3/g$, sogar wenigstens 0,5 $cm^3/g$, ein Makroporenvolumen ( $V_{1000Å}$) von höchstens 0,5 $cm^3/g$, ein Mikroporenvolumen ($V_{0-60Å}$) von höchstens 0,55 $cm^3/g$ und eine spezifische Oberfläche von wenigstens 120 $m^2/g$ aufweisen, wobei diese Extrudate mikroskopisch teilweise in Form von Stapelungen von Blättchen und zum Teil in Form von Nadeln vorliegen, wobei diese Nadeln gleichzeitig um die Stapelungen von Plättchen und zwischen den Plättchen verteilt sind.

**2.** Aluminiumoxidextrudate nach Anspruch 1 aus einem Herstellungsverfahren, das die Stufen a1, b1, c1, d1, f1, g1 umfasst und in welchem das Aluminiumoxid aus der Stufe b1 wenigstens 3 Gew.-% Boehmit umfasst.

**3.** Aluminiumoxidextrudate nach einem der Ansprüche 1 und 2 aus einem Herstellungsverfahren, das die Stufen a1, b1, c1, d1, e1, f1, g1 oder auch die Stufen a2, b2, c2, d2, e2, f2, g2 umfasst, **dadurch gekennzeichnet, dass** in deren Herstellungsverfahren das Kneten c1 oder d2 in Gegenwart von Wasser und Säure, z.B. Salpetersäure, betrieben wird.

**4.** Verfahren zur Herstellung von Aluminiumextrudaten nach einem der Ansprüche 1 bis 3, **dadurch gekennzeichnet, dass** es die Stufen a1, b1, c1, d1, e1, f1, g1 umfasst.

**5.** Verfahren nach Anspruch 4, **dadurch gekennzeichnet, dass** bei der Stufe b1 das Ausgangsaluminiumoxid derart rehydratisiert wird, dass es einen Boehmittyp-Aluminiumoxidgehalt von wenigstens 3 Gew.-%, vorzugsweise höchstens 40 Gew.-% aufweist.

**6.** Verfahren nach einem der Ansprüche 4 oder 5, **dadurch gekennzeichnet, dass** bei der Stufe b1 das Ausgangsaluminiumoxid durch Suspendieren in Wasser in Gegenwart von Zitronensäure rehydratisiert wird.

**7.** Verfahren nach einem der Ansprüche 4 bis 6, **dadurch gekennzeichnet, dass** die Erdölemulsion in Wasser ein tensidaktives, nichtionisches Reagens umfasst, das gewählt ist unter den nichtionischen Tensidaktivmitteln, die Zweifachblöcke Ethylenoxid (OE)-Propylenoxid (OP) aufweisen und vorzugsweise eine Anzahl von OP-Motiven von wenigstens 10 aufweisen.

**8.** Verfahren nach Anspruch 7, **dadurch gekennzeichnet, dass** das tensidaktive Reagens gewählt ist unter jenen, für die die Kohlenwasserstoffemulsion in Wasser in saurem Milieu stabil ist.

**9.** Verfahren nach einem der Ansprüche 4 bis 8, **dadurch gekennzeichnet, dass** der Gehalt der Emulsion an tensidaktivem Reagens wenigstens 3 Gew.-% im Verhältnis zum Kohlenwasserstoff ist.

**10.** Verfahren nach einem der Ansprüche 4 bis 9, **dadurch gekennzeichnet, dass** man das rehydratisierte Aluminiumoxid und die Emulsion in Gegenwart von Salpetersäure knetet.

**11.** Verfahren nach Anspruch 8, **dadurch gekennzeichnet, dass** man die Paste auf Aluminiumoxidbasis zwischen den Stufen c1 und c3 neutralisiert.

**12.** Verfahren nach einem der Ansprüche 4 bis 11, **dadurch gekennzeichnet, dass** man die hydrothermische Behandlung in Gegenwart eines Gemisches von Salpetersäure und Essigsäure durchführt.

**13.** Verfahren nach einem der Ansprüche 4 bis 12, **dadurch gekennzeichnet, dass** die hydrothermale Behandlung derart durchgeführt wird, dass am Ende der Stufe f1 das Aluminiumoxid einen Boehmittyp-Aluminiumoxidgehalt von höchstens 70 Gew.-%, vorzugsweise wenigstens 5% aufweist.

**14.** Verfahren zur Herstellung von Aluminiumoxidextrudaten gemäß einem der Ansprüche 1 bis 3, **dadurch gekennzeichnet, dass** es die Stufen a2, b2, c2, d2, e2, f2, g2 umfasst.

**15.** Verfahren nach Anspruch 14, **dadurch gekennzeichnet, dass** man bei der Stufe c2 die Aluminiumoxidkugel durch eine Behandlung unter Wasserdampf bei einer Temperatur zwischen 30 und 100°C reifen lässt.

**16.** Verfahren nach einem der Ansprüche 14 oder 15, **dadurch gekennzeichnet, dass** am Ende der Stufe c2 der Boehmittyp-Aluminiumoxidgehalt zwischen 4 und 40%, vorzugsweise zwischen 20 und 30% im Verhältnis zum Aluminiumoxidgewicht liegt.

**17.** Verfahren nach einem der Ansprüche 14 bis 16, **dadurch gekennzeichnet, dass** man die hydrothermale Behandlung f2 in Gegenwart eines Gemischs von Salpetersäure und Essigsäure durchführt.

**18.** Verfahren nach einem der Ansprüche 14 bis 17, **dadurch gekennzeichnet, dass** die hydrothermale Behandlung derart durchgeführt wird, dass am Ende der Stufe f2 das Aluminiumoxid einen Boehmittypaluminiumoxidgehalt von höchstens 70 Gew.-%, vorzugsweise wenigstens 5% aufweist.

**19.** Verfahren zur Herstellung von Aluminiumoxidextrudaten nach Anspruch 1, **dadurch gekennzeichnet, dass** es die Stufen a3, b3, c3, d3, e3, f3 umfasst.

**20.** Verwendung der Extrudate nach einem der Ansprüche 1 bis 3 oder geeignet, aus dem Verfahren nach einem der Ansprüche 4 bis 19 zu stammen, als Katalysatorträger, Katalysator oder Adsorptionsmittel.

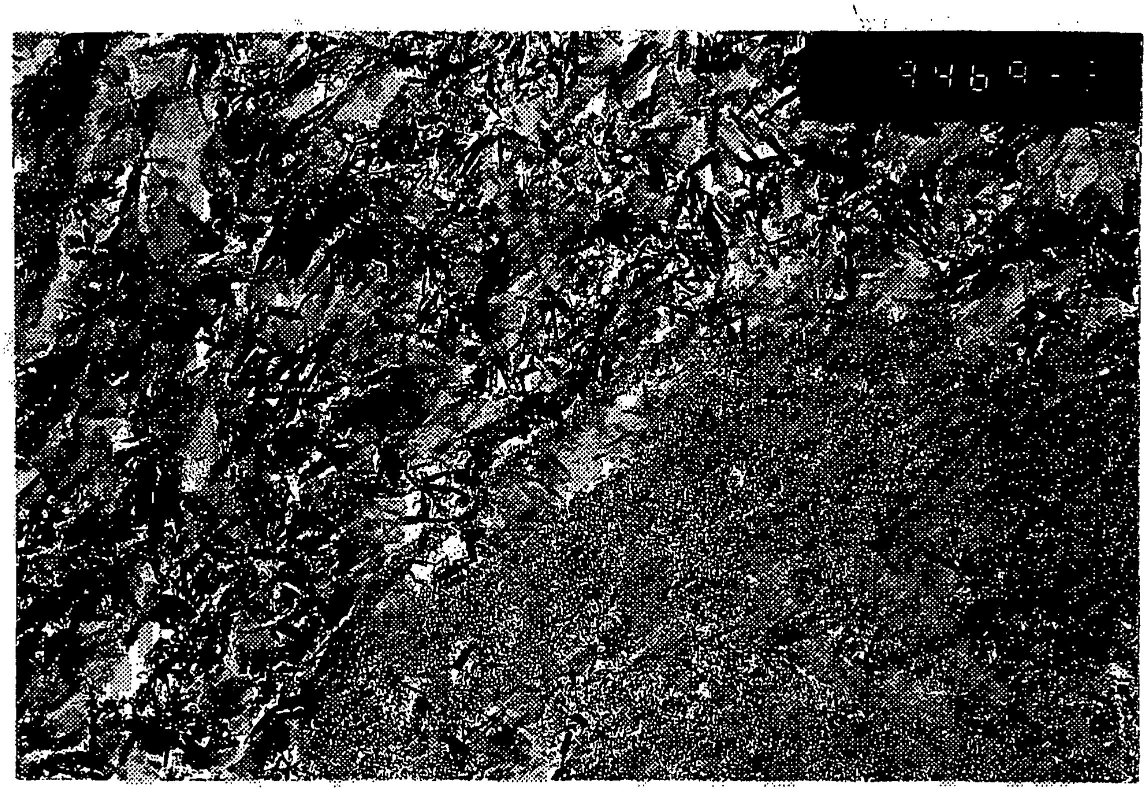

FIGURE 1

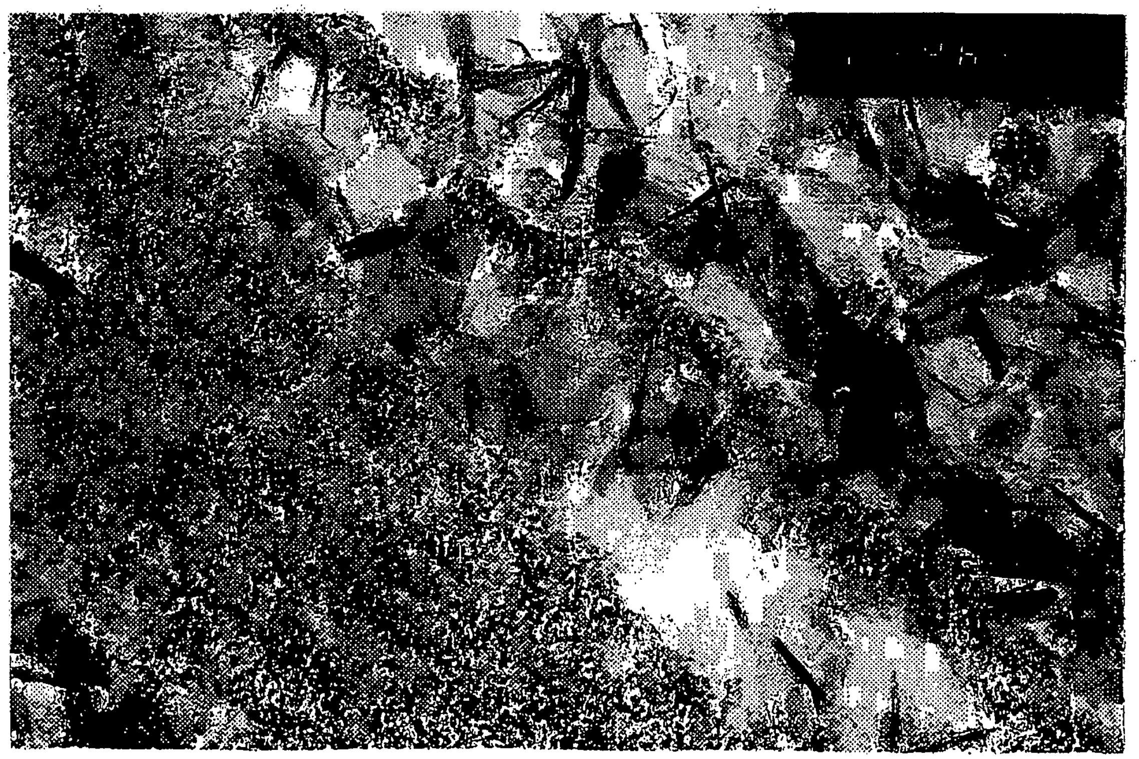

FIGURE 2